(19) Europäisches Patentamt
European Patent Office
Office européen des brevets

(11) **EP 0 951 776 B1**

(12) **EUROPÄISCHE PATENTSCHRIFT**

(45) Veröffentlichungstag und Bekanntmachung des Hinweises auf die Patenterteilung:
**16.05.2001 Patentblatt 2001/20**

(21) Anmeldenummer: **97951830.5**

(22) Anmeldetag: **08.12.1997**

(51) Int Cl.⁷: **H04N 5/238**

(86) Internationale Anmeldenummer:
**PCT/DE97/02852**

(87) Internationale Veröffentlichungsnummer:
**WO 98/32280 (23.07.1998 Gazette 1998/29)**

(54) **VERFAHREN ZUR REGELUNG DER BELICHTUNG VON VIDEOKAMERAS**

BRIGHTNESS CONTROL ON VIDEO CAMERAS

PROCEDE DE REGLAGE DE L'ECLAIRAGE DE CAMERAS VIDEO

(84) Benannte Vertragsstaaten:
**AT BE DE FR GB NL**

(30) Priorität: **17.01.1997 DE 19701484**

(43) Veröffentlichungstag der Anmeldung:
**27.10.1999 Patentblatt 1999/43**

(73) Patentinhaber: **ROBERT BOSCH GMBH**
**70442 Stuttgart (DE)**

(72) Erfinder:
• **LOHSCHELLER, Herbert**
**D-71546 Aspach (DE)**
• **BINDER, Bernd**
**D-72458 Albstadt (DE)**

(56) Entgegenhaltungen:
**EP-A- 0 157 148       EP-A- 0 394 959**
**EP-A- 0 488 442       EP-A- 0 513 976**
**EP-A- 0 585 916       EP-A- 0 775 926**
**WO-A-87/03768         DE-A- 3 340 133**
**DE-A- 4 106 825       US-A- 5 065 444**

**Beschreibung**

Stand der Technik

Die Erfindung geht aus von einem Verfahren zur Regelung der Belichtungsparametern von stationär montierten Videokameras, z. B. für die Verkehrsüberwachung, nach dem Oberbegriff des Hauptanspruchs.

Aus dem britischen Patent GB 21 86 461 ist bereits ein Verfahren zur Regelung der Belichtung für eine stationäre Videokamera bekannt. Dabei handelt es sich um Kameras, die in automatischen Überwachungssystemen eingesetzt werden. Diese Kamerasysteme überwachen ein Objekt über den gesamten Zeitraum von 24 Stunden. Das bedeutet, daß sich die Belichtungsverhältnisse für den zu beobachtenden Bereich im allgemeinen über den Verlauf des Tages auch drastisch ändern können. Den Kamerasystemen muß eine automatische Belichtungskontrolle eingebaut werden. In der britischen Patenschrift wird eine Sensor vorgeschlagen, der durch die Kameralinse hindurch die Lichtverhältnisse detektiert. Mit den gemessenen Werten werden die Beleuchtungsparameter der Kamera eingestellt und nachgeführt. Der Sensor bekommt seine Belichtungsdaten aus einem Bereich, der nicht der Sichtbereich der Videokamera ist. Das hat den Nachteil, daß bei sehr schwierigen Lichtverhältnissen, die in dem zu beobachtenden Bereich herrschen, Falschbelichtungen vorkommen können. So ist es z. B. möglich, daß eine regennaße und glänzende Straße ganz andere Belichtungsvoraussetzungen erfordert, als sie der Sensor aus seiner Messung eines Bildausschnitts, z. B. eines Himmelbereichs, her erkennen kann.

Bekannt sind automatische Verstärkungsregelungen, die eine kontinuierliche Anpassung der belichtungsparameter unter dauernder Auswertung des Bidinhalts erlauben.

Aus der internationalen Anmeldung WO-A-87/03768 ist an sich bereits ein verfahren zum Detektieren der Bildbreite in einem Videosignal bekannt, bei welchem die Belichtungsparameter einer Videokamera über einen Korrekturfaktor eingestellt werden, welcher durch Vergleich von Grauwerten von Folgen von Pixeln des vorhergehenden Bildes und des aktuellen Bildes ermittelt wird.

Der Erfindung gemäß dem Hauptanspruch liegt die Aufgabe zugrunde, die obengenannten Nachteile zu vermeiden.

Vorteile der Erfindung

Das erfindungsgemäße Verfahren mit den kennzeichnenden Merkmalen des Hauptanspruchs hat dem gegenüber den Vorteil, daß die Belichtungsparameter für die Videokamera genau aus dem Bildausschnitt, den die Kamera beobachtet, und genau auf der lichtempfindlichen Ebene gewonnen werden. Zudem wird es für Anwendungen eingesetzt, bei denen die starken Unterschiede von Tag und Nacht vorteilhafterweise durch ein Blitzgerät ausgeglchen wird. Damit ist es möglich, auch bei sehr schwierigen Lichtverhältnissen eine gute Belichtung zu erhalten, wenn nur einzelne Bilder zur Nachfühhrung der Belichtungsparameter ausgewertet werden.

Durch die in den abhängigen Ansprüchen aufgeführten Maßnahmen sind vorteilhafte Weiterbildungen und Verbesserungen des im Hauptanspruch angegebenen Verfahrens möglich.

Besonders vorteilhaft ist es, daß das Verfahren Meßzonen aus dem Bild auswählt, und über Grauwerthistogramme und Kreuzkorrelationen einen Korrekturfaktor ermittelt. Besonders vorteilhaft ist es, daß der für die Belichtungsparameter verwendete Korrekturfaktor als Mittelwert über alle ausgewählten Meßzonen berechnet wird. Weiterhin ist es von Vorteil, daß der einzelne Korrekturfaktor auf seine Plausibilität überprüft wird. Dadurch wird vermieden, daß z. B. ein durch das Bild fahrendes Fahrzeug die Belichtung und damit den Korrekturfaktor verfälscht.

Weiterhin ist es vorteilhaft, daß für die Kontrolle der Übersteuerung eines Bildes ebenfalls Meßzonen aus dem Bild ausgewählt werden. Für das Vorhandensein einer Übersteuerung müssen mehrere Kriterien erfüllt sein. Vorteilhafterweise wird der Verfahrensablauf nach Anspruch 6 vorgesehen.

Zeichnung

Ausführungsbeispiele der Erfindung sind in der Zeichnung dargestellt und in der nachfolgenden Beschreibung näher erläutert. Es zeigt Figur 1 schematisch ein Grauwerthistogramm, Figur 2 eine Grauwerthistrogramm mit einer Übersteuerung, Figur 3 schematisch das Vorgehen bei einer Kreuzkorrelation und Fig.4 die Videokamera.

Beschreibung des Ausführungsbeispiels

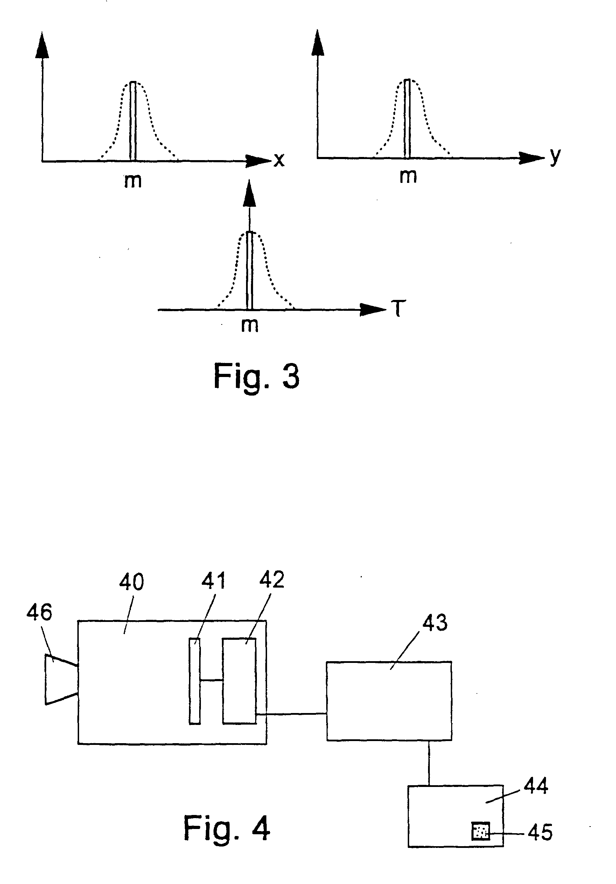

Fig 4 zeigt einen Videokamera 40 mit einem Objektiv 46 und einer lichtempfindlichen CCD-Einheit 41. Die CCD-Einheit ist mit einer Regelung 42 verbunden, die wiederum an eine externe Steuerung 43 angebunden ist. Die externe Steuerung 43 ist mit einem Bildschirm 44 verbunden. Auf dem Bildschirm lassen sich einzelne Bilder darstellen, aus denen Meßzonen 45 ausgewählt werden.

Die erfindungsgemäße Belichtungssteuerung einer Videokamera wird z. B. in einem System zur automatischen Verkehrsgebührenerfassung eingesetzt. Ein solches System überwacht ordnungsgemäß durchgeführte Buchungsvorgänge beim Passieren einer Mautstelle und erstellt von den Fahrzeugen Standbilder. Aus den Standbildern werden z. B. die Nummernschilder durch automatische Zeichenerkennung identifiziert. Das System muß 24 Stunden arbeiten, daher müssen die Belichtungsparameter der Kamera den jeweiligen Lichtverhältnissen angepaßt werden. Belichtungsparameter sind z.B. Blendenstellungen, Auslesedauer der CCD-Zellen usw. Dazu werden die zum Teil mit Blitzlicht aufgenommenen Bilder aus dem laufenden Betrieb ausgewertet, um die derzeitige Lichtsichtsituation festzustellen.

Zuerst wird aus den elektronisch aufgenommenen Standbildern, die in der Steuerung 43 als Pixelbilder vorliegen, eine repräsentative Meßzonen ausgewählt. Eine Meßzone 45 wird definiert als zusammenhängende Folge von Bildpixeln. Dabei werden zwei unterschiedliche Meßzonen zugrunde gelegt:

- Meßzonen zur Ermittlung des Korrekturfaktors der Belichtung, und
- Meßzonen für die Übersteueruncskontrolle der Kamera.

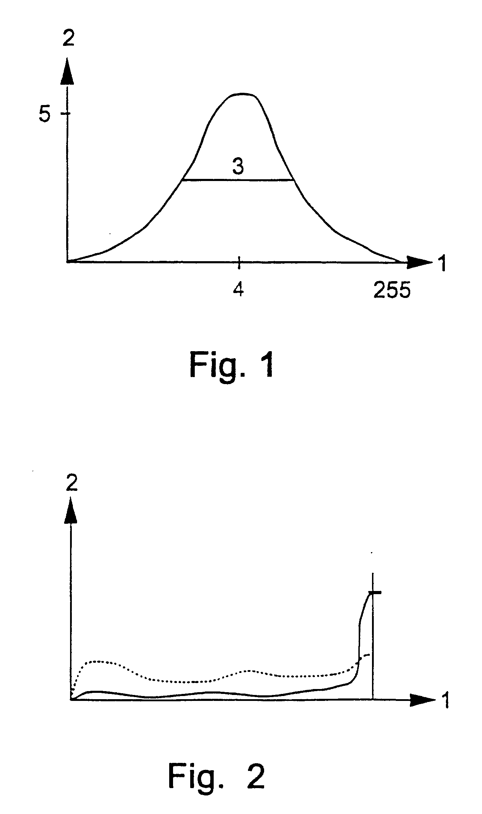

Die Anzahl und die Lage der Meßzonen wird bei der Installation des Systems in der Steuerung 43 festgelegt, kann aber jederzeit auch nachträglich interaktiv verändert werden. Dabei kann auch die Art der Meßzone beliebig von einer Zone zur Ermittlung des Korrekturfaktors zu einer Zone zur Übersteuerungskontrolle verändert werden. Für die einmal festgelegten Meßzonen wird ,z. B. für die spätere Ermittlung des Korrekturfaktors, das Grauwerthistogramm ermittelt und abgespeichert. Figur 1 zeigt die Häufigkeit 2 eines Grauwertes der einzelnen Pixel der Meßzone 45 als y-Achse aufgetragen über dem Grauwert 1 auf der x-Achse. Für ein 8-Bit-Signal kann der Grauwert Werte zwischen 0 und 255 annehmen. Die Spreizung 3 des Grauwerthistogramms ist die Standardabweichung der Grauwerte. Der Erwartungswert wird durch eine Mittelung über die Häufigkeitsverteilung errechnet. Aus einem solchen Grauwerthistogramm werden weitere Werte, wie Position 4 und Wert 5 des Maximums der Verteilung berechnet und abgespeichert.

Für eine erste Inbetriebnahme wird das System der Videokamera zunächst kalibriert. Dafür werden die Belichtungsparameter der Kamera, Verschlußzeiten sowie Verstärkung, so eingestellt, daß in Verbindung mit der aktuellen Lichtsituation eine ideale Belichtung der Aufnahme erreicht wird. Beim erfindungsgemäßen System kann außer der visuellen Kontrolle der Belichtung der Aufnahmen eine sofortige Anzeige des Grauwerthistogramms jeder Meßzone erfolgen. Dadurch ist bereits bei der Kalibrierung eine Überwachung des Ergebnisses möglich. Ist das System in Betrieb genommen, muß die Belichtung ständig überwacht werden. Soll die Belichtung eines neu aufgenommenen Bildes überprüft werden, so wird bei der Ermittlung des Korrekturfaktors angenommen, daß von jeder Meßzone für den Korrekturfaktor sowohl die beschriebenen Werte der Kalibrierung als auch die Werte des aktuell aufgenommenen Bildes vorliegen. Beide Werte liegen in Form von Grauwerthistogrammen vor. Zum Vergleich der Belichtung beiden Bilder wird das Ergebnis der Kreuzkorrelation der Grauwerthistogramme herangezogen. Die Kreuzkorrelation bildet mathematisch gesehen die Summe über zwei vergleichbare Funktionen x und y mit einem Verschiebungsvektor τ.

In Figur 3 ist die Häufigkeit 2 bestimmter Grauwerte als y-Achse über dem Grauwert 1 als x-Achse dargestellt. Es werden zwei Funktionen x und y dargestellt, die beide ein Maximum an der Stelle m haben. Bildet man mit solchen Funktionen die Kreuzkorrelationsfunktion, so befindet sich das Maximum genau bei $\tau = 0$. Das macht man sich bei der Vergleich der Belichtung der beiden Bilder zunutze. Dabei wird davon ausgegangen, daß sich der Funktionsverlauf der Kreuzkorrelation bei gleichen Bildinhalten aber unterschiedlicher Belichtung nicht stark ändert, sondern sich lediglich die Position des Maximums der Kreuzkorrelation verschiebt. Auch vom Kreuzkorrelationskoeffizienten, d. h. vom Maximum der Kreuzkorrelation, wird angenommen, daß er bei veränderter Belichtung annähernd 1 bleibt. Die Position des Maximums, das sich im Bereich größer oder kleiner als Null oder bei Null befindet, wird als Indikator für die quantitative Veränderung der Belichtungssituation herangezogen. Würde sich der Bildinhalt zwischen den beiden Grauwerthistogrammen x und y drastisch ändern, wäre davon auszugehen, daß z. B. ein störendes Objekt gerade das Bild durchquert, und daher die Messung für eine Belichtungsregelung nicht herangezogen werden kann. Der Korrekturfaktor jeder Meßzone ist also die Position des Maximums, gewichtet mit dem Wert des Maximums der Kreuzkorrelation. Der Gesamtkorrekturfaktor, der die Belichtung verändert, ist der negative, mit den Flächen der Meßzonen gewichtete Mittelwert aller einzelnen Korrekturfaktoren. Dieser Korrekturfaktor gibt die notwendige Veränderung der Kamerabelichtung in Grauwerten an. Um auszuschließen, daß Korrekturfaktoren in die Gewichtung eingehen, bei denen die Messung durch vorbeifahrende Objekte verfälscht wird, muß der

$$K = -\frac{1}{A_{ges}} \sum_{i=1}^{N} (A_i \, \text{MaxCorr} \, \text{MaxPos})$$

mit K: Korrekturfaktor

$A_{ges}$ : Gesamtfläche der Meßzonen

N: Anzahl der Meßzonen vom Typ 1

$A_i$ : Fläche der Meßzone i

MaxCorr: Maximum der Kreuzkorrelation

MaxPos: Position des Maximums der Kreuzkorrelation

Korrekturfaktor einer Validierung unterzogen werden. Man muß ausschließen können, daß sich der Bildinhalt innerhalb einer Meßzone geändert hat und daher der errechnete Wert nicht verwendet werden darf. Der Bildinhalt einer Zone ändert sich z. B. wenn ein Fahrzeug ganz oder teilweise die Zone ausfüllt. Dies ist für die Messung nicht erwünscht, da sich dadurch die Form des Grauwerthistogramms drastisch verändert. Deshalb werden einige Kriterien eingeführt, die zur Verwerfung eines Korrekturfaktors einer Meßzone führen. Diese Kriterien sind:

a) ein zu großer Unterschied zwischen Erwartungswert und Maximum der Kreuzkorrelation der Grauwerthistogramme. Basis dafür ist die Tatsache, daß sich die Form der Kreuzkorrelation bei gleichem Bildinhalt nicht stark verändert. Daher müssen Maximum der Messung und Erwartungswert der Kreuzkorrelation eng benachbart bzw. im Idealfall gleich sein. Der maximal zugelassene Unterschied ist beim hier vorgestellten System durch eine Schwelle einstellbar.

b) ein großer Unterschied der Standardabweichung von gespeichertem und aktuellem Grauwerthistogramm der Meßzone. Das Kriterium wurde eingeführt, falls das aktuell aufgenommene Bild wegen einer Störung einen über den gesamten Bereich homogenen Verlauf des Grauwerthistogramms aufweist. Dann wird die Kreuzkorrelation ebenfalls einen homogenen Verlauf besitzen, weshalb es möglich ist, daß Erwartungswert und Maximum so nahe beieinanderliegen, daß Kriterium a) erfüllt ist. Die Bildinhalte der Meßzonen sind in einem solchen Fall aber unterschiedlich und die Meßzone muß verworfen werden. Daher wurde ein Vergleich der Standardabweichungen, die die Spreizung des Grauwerthistogramms darstellen, durchgeführt. Auch hier ist der maximal zugelassene Unterschied durch eine Schwelle einstellbar.

Um eine Übersteuerung des Systems zu verhindern, werden Meßzonen ausgewählt, die der Übersteuerungskontrolle dienen. Aus den Meßzonen wird ebenfalls das Grauwerthistogramm ermittelt und das Meßergebnis folgenden Kriterien zur Indikation einer Übersteuerung herangezogen:

a) Das Maximum des Grauwerthistogramms liegt beim größtmöglichen Grauwert. Figur 2 zeigt die Häfigkeit bestimmter Grauwerte 2 über den Grauwerten 1. Wie in Figur 2 in der durchgezogenen Linie dargestellt, liegt das Maximum bei einer solchen Messung beim maximalen Grauwert. Der maximale Grauwert wird festgestellt, indem der größte Grauwert mit dem Durchschnittswert einiger benachbarter Grauwerte verglichen wird. Ein Peak liegt dann vor, wenn der Wert beim größten Grauwert um einen einstellbaren Faktor größer als der Durchschnittswert der benachbarten Grauwerte ist.

b) Es existiert im Grauwerthistogramm ein Peak beim größten Grauwert und der Erwartungswert des Grauwerthistogramms liegt über einer gewissen Schwelle. Diese Situation wird in Figur 2 mit der gestrichelten Linie dargestellt. In diesem Fall gibt es kein absolutes Maximum beim höchsten Grauwert, sondern ein allgemein hochliegender Pegel über die gesamte Verteilung hinweg. Ist mindestens eins der Kriterien a) oder b) erfüllt, so gilt der Bildbereich der Meßzone als übersteuert. Für die Kontrolle der Übersteuerung werden mehrere Meßzonen ausgewertet. Die Auswertung erfolgt immer über mehrere aufeinander folgende Bilder hinweg. Die Bilder sowie ihre Grauwerthistogramme werden gespeichert, gleichgültig, ob sie übersteuert waren oder nicht. Wird das aktuelle Bild durch eine oder mehrere Meßzonen als übersteuert erkannt, werden folgende Bedingungen geprüft: Hat die Berechnung des Korrekturfaktors ergeben, daß das Bild heller gemacht werden sollte und war eine einstellbare Anzahl der vorangegangenen Bilder übersteuert. Ist diese Bedingung erfüllt, so wird eine Veränderung der Belichtungsparameter der Kamera verhindert. Der gesamte Ablauf der Belichtungsregelung wird in folgende Schritte eingeteilt:

1. Festlegung von Größe, Position und Art der Meßzonen im Bildbereich. Das System unterscheidet zwischen Meßzonen zur Ermittlung des Korrekturfaktors und solchen zur Übersteuerungskontrolle.

2. Einstellung der optimalen Belichtung.

3. Extraktion und Speicherung der Referenzwerte jeder Meßzone und der aktuellen Belichtungsparameter der Kamera (Kalibrierung)

4. Dauerbetrieb. Im Dauerbetrieb werden die Regelung der Belichtung notwendig. Der Ablauf der Regelung kann man so zusammenfassen:

4.1 Auswahl des letzten aufgenommenen Bildes oder falls das letzte Bild zu alt ist, Aufnahme eines neuen Bildes und Extraktion der Meßdaten.

4.2 Vergleich der Daten des aktuellen Bildes mit den gespeicherten Referenzdaten, Ermittlung des Korrekturwertes aus den Meßzonen für den Korrekturwert.

4.3 Überprüfung der Kriterien zur Übersteuerung aus der Meßzone zur Übersteuerungsprüfung. Falls die Kriterien erfüllt sind, erfolgt Rücksprung zum Punkt 1).

4.4 Veränderung der Kameraparameter, falls der Betrag des Korrekturwerts einen einstellbaren Wert überschreitet.

**Patentansprüche**

1. Verfahren zur Regelung von Belichtungsparametern von stationär montierten Videokameras (40), wobei die Videokameras Bilder aufnehmen, die zu elektronischen Pixeln verarbeitet werden, wobei die Belichtungsparameter der Videokameras (40) über einen Korrekturfaktor eingestellt werden, <u>dadurch gekennzeichnet,</u> daß der Korrekturfaktor durch einen Vergleich von Grauwerten von zusammenhängenden Folgen von Pixeln (Meßzonen 45) des vorhergehenden Bildes und des aktuellen Bildes ermittelt wird und daß folgende Schritte vorgenommen werden:

   a) Festlegung von Größe, Position und Art der Meßzonen im Bildbereich,
   b) Einstellung der optimalen Belichtung,
   c) Extraktion und Speicherung der Referenzwerte jeder Meßzone und der aktuellen Belichtungsparameter der Kamera
   d) Dauerbetrieb mit Regelung in einstellbaren Zeitintervallen.

2. Verfahren zur Regelung der Belichtung nach Anspruch 1, dadurch gekennzeichnet, daß aus den Grauwerten der Meßzonen Grauwerthistogramme erstellt und über eine Kreuzkorrelation bewertet werden und daraus der Korrekturfaktor errechnet wird.

3. Verfahren zur Regelung der Belichtung nach Anspruch 1 oder 2, dadurch gekennzeichnet, daß der Korrekturfaktor als Mittelwert über alle Meßzonen berechnet wird.

4. Verfahren zur Regelung der Belichtung nach einem der vorhergehenden Absprüche, dadurch gekennzeichnet, daß jeder einzelne Korrekturfaktor auf seine Verwertbarkeit für das Verfahren überprüft wird, indem Kriterien für seine Plausiblität vorgegeben werden.

5. Verfahren zur Regelung der Belichtung nach Anspruch 1 bis 4, dadurch gekennzeichnet, daß Meßzonen für eine Übersteuerungskontrolle ausgewertet werden, wobei Grauwerthistogramme der Meßzonen auf Kriterien für das Vorliegen einer Übersteuerung überprüft werden.

6. Verfahren zur Regelung der Belichtung nach den Ansprüchen 1 bis 5, dadurch gekennzeichnet, daß die Regelung folgende Schritte aufweist:

   a) Auswahl des letzten aufgenommenen Bildes oder Aufnahme eines neuen Bildes und Extraktion der Meßdaten,
   b) Vergleich der Daten des aktuellen Bildes mit den gespeicherten Referenzdaten, Ermittlung des Korrekturwerts,
   c) Überprüfung der Kriterien zur Übersteuerung
   d) Veränderung der Kameraparameter, falls der Betrag des Korrekturwertes einen einstellbaren Wert überschreitet.

**Claims**

1. Method for regulating exposure parameters of stationarily mounted video cameras (40), the video cameras recording images which are processed to form electronic pixels, the exposure parameters of the video cameras (40) being set using a correction factor, characterized in that the correction factor is determined by a comparison of grey-scale values of contiguous sequences of pixels (measurement zones 45) of the preceding image and of the current image, and in that the following steps are performed:

a) definition of size, position and type of the measurement zones in the image area,

b) setting of the optimum exposure,

c) extraction and storage of the reference values of each measurement zone and of the current exposure parameters of the camera

d) continuous operation with regulation in adjustable time intervals.

2. Method for regulating the exposure according to Claim 1, characterized in that grey-scale value histograms are created from the grey-scale values of the measurement zones and assessed by means of a cross-correlation and the correction factor is calculated from this.

3. Method for regulating the exposure according to Claim 1 or 2, characterized in that the correction factor is calculated as an average value over all the measurement zones.

4. Method for regulating the exposure according to one of the preceding claims, characterized in that each individual correction factor is checked with regard to its usability for the method by criteria for its plausibility being prescribed.

5. Method for regulating the exposure according to Claims 1 to 4, characterized in that measurement zones are evaluated for monitoring overdriving, grey-scale value histograms of the measurement zones being checked with regard to criteria for the presence of overdriving.

6. Method for regulating the exposure according to Claims 1 to 5, characterized in that the regulation has the following steps:

a) selection of the last recorded image or recording of a new image and extraction of the measurement data,

b) comparison of the data of the current image with the stored reference data, determination of the correction value,

c) checking of the criteria with respect to overdriving,

d) changing of the camera parameters if the magnitude of the correction value exceeds an adjustable value.

**Revendications**

1. Procédé de réglage des paramètres d'éclairage de caméras vidéo montées de façon stationnaire (40), dans lequel les caméras vidéo enregistrent des images, qui sont retraitées en pixels électroniques, les paramètres d'éclairage des caméras vidéo (40) étant réglés au moyen d'un facteur de correction,
caractérisé en ce que

- le facteur de correction est déterminé par une comparaison entre des valeurs de gris de suites de pixels continues, (zones de mesure 45) de l'image précédente et de l'image actuelle, et
- on effectue les séquences suivantes:

a) détermination de la grandeur, de la position et du type des zones de mesure dans la zone de l'image,

b) réglage de l'éclairage optimal,

c) extraction et mise en mémoire des valeurs de référence de chaque zone de mesure, et des paramètres actuels d'éclairage de la caméra,

d) fonctionnement continu avec réglage dans des intervalles de temps réglables.

2. Procédé de réglage de l'éclairage selon la revendication 1,
caractérisé en ce que
on établit des histogrammes des valeurs de gris à partir des valeurs de gris des zones de mesure, on les évalue au moyen d'une corrélation croisée et on calcule à partir de là le facteur de correction.

3. Procédé de réglage de l'éclairage selon la revendication 1 ou 2,
caractérisé en ce que
le facteur de correction est calculé comme valeur moyenne sur toutes les zones de mesure.

4. Procédé de réglage de l'éclairage selon l'une quelconque des revendications précédentes,
caractérisé en ce que

chaque facteur individuel de correction est contrôlé en ce qui concerne son utilité pour le procédé, en prédéfinissant des critères pour sa vraisemblance.

5. Procédé de réglage de l'éclairage selon l'une quelconque des revendications 1 à 4,
caractérisé en ce qu'
on exploite des zones de mesure pour un contrôle de saturation, des histogrammes de valeur de gris des zones de mesure étant contrôlés quant aux critères pour l'existence d'une saturation.

6. Procédé de réglage de l'éclairage selon l'une quelconque des revendications 1 à 5,
caractérisé en ce que
le réglage présente les séquences suivantes :

a) sélection de l'image enregistrée en dernier ou enregistrement d'une nouvelle image et extraction des données de mesure,
b) comparaison des données de l'image actuelle avec les données de référence mises en mémoire, détermination de la valeur de correction,
c) contrôle des critères pour saturation,
d) modification des paramètres de la caméra, au cas où le montant de la valeur de correction dépasse une valeur réglable.

Fig. 1

Fig. 2

Fig. 3

Fig. 4